# NEUE EUROPÄISCHE PATENTSCHRIFT

(11) **EP 1 450 722 B2**
(45) Veröffentlichungstag und Bekanntmachung des Hinweises auf die Entscheidung über den Einspruch: **16.05.2018**
(45) Hinweis auf die Patenterteilung: 14.09.2005
(21) Anmeldenummer: 02803789.3
(22) Anmeldetag: 23.11.2002
(51) Int. Cl.: A61C 8/00

(54) **KERAMISCHES DENTALIMPLANTAT**
CERAMIC DENTAL IMPLANT
IMPLANT DENTAIRE C RAMIQUE

(30) Priorität: 30.11.2001 DE 10159683
(43) Veröffentlichungstag der Anmeldung: 01.09.2004
(60) Teilanmeldung: 05016481.3
(73) Patentinhaber: Straumann Holding AG, 4002 Basel (CH)
(72) Erfinder: Gahlert, Michael, 81369 München (DE)
(74) Vertreter: Schaad, Balass, Menzl & Partner AG
(86) Internationale Anmeldenummer: PCT/EP2002/013187
(87) Internationale Veröffentlichungsnummer: WO 2003/045268

(56) Entgegenhaltungen:
- EP-A- 0 324 143
- EP-A- 0 870 478
- WO-A-00/44305
- WO-A-01/34056
- DE-A- 3 233 992
- DE-A- 10 022 260
- US-A- 4 145 764
- US-A- 5 642 996
- US-A- 5 934 287
- US-A- 6 050 819
- US-A- 6 165 925
- US-B1- 6 174 167
- Vortragsunterlagen Dr. Volz
- AKAGAWA Y. ET AL: 'Interface histology of unloaded and early loaded partially stabilized zirconia endosseous implant in initial bone healing' THE JOURNAL OF PROSTHETIC DENTISTRY Juni 1993, Seiten 599 - 604
- EN ISO 4287: 1997, Oberflächenbeschaffenheit: Tastschnittverfahren: Benennubgen, Definitionen und Kenngrößen der Oberflächenbeschaffenheit
- ISO Standard 13356 "Implants for surgery - Ceramic materials based on ytria-stabilized tetragonal zirconia (Y-TZP)", 1997

## Beschreibung

Die Erfindung betrifft ein Dentalimplantat mit einem Verankerungsteil zur Verankerung im Knochen und mit einem Aufbauteil zur Aufnahme eines zu applizierenden Elementes, wie einem Abutment oder einer Kronen- Brücken- oder Prothesenkonstruktion.

Dentalimplantate werden seit mehr als 10 Jahren erfolgreich eingesetzt. Die überwiegende Anzahl der derzeit verwendeten Dentalimplantate bestehen aus Titan, da Titan einen ausreichend niedrigen Elastizitätsmodul und eine relativ große Festigkeit aufweist. Des weiteren ist von besonderer Bedeutung, dass mit Titan als Implantatmaterial bei geeigneter Ausführung der Oberfläche (z.b. Aufrauen durch Sandstrahlen) eine sichere Verbundosteogenese erreicht wird. Dies bedeutet, dass die Titan-Implantate nach dem Erreichen einer Primärstabilität durch Einschrauben in den Knochen innerhalb einer Einheilzeit von etwa 3 bis 4 Monaten sicher verknöchern, so dass ein dauerhafter Verbund zwischen dem in den Knochen eingeschraubten Verankerungsteil und dem Knochen gewährleistet ist. Meist werden hierbei zweiteilige Implantate eingesetzt, wozu es grundsätzlich zwei Möglichkeiten gibt.

Gemäß einem geschlossenen, subgingivalen System, wird das Verankerungsteil des Implantates bis auf Knochenkammhöhe versenkt, so dass die Mukoperiostdecke über dem Implantat vernäht werden kann. Nachteilig ist hierbei die notwendige Zweitoperation am Ende der Einheilphase, um dann ein Aufbauteil und darauf die gewünschte Prothese oder Krone applizieren zu können.

Dagegen kann bei dem offenen, transgingivalen System, bei dem das Verankerungsteil des Implantates bis zu ca. 3 mm oberhalb des Knochenkammes auf Schleimhautniveau versenkt wird, eine Sekundäroperation vermieden werden. Die Wundränder können direkt an die Implantathalspartie adaptiert werden, womit ein primärer Weichgewebeabschluss am Implantat erfolgt.

Eine derartige zweiteilige Implantatkonstruktion für ein offenes transgingivales System wird beispielsweise von der Institut-Straumann AG, Waldenburg/Schweiz unter der Bezeichnung ITI®DENTAL IMPLANT SYSTEM vertrieben. Sowohl das Verankerungsteil oder Primärteil, das transgingival implantiert wird, als auch die zugehörigen Aufbauteile bestehen hierbei aus reinem Titan. Um eine gute Verknöcherung zu gewährleisten, ist die Titanoberfläche entweder grob sandgestrahlt oder aber mit Titan durch thermisches Spritzen beschichtet. Beide Oberflächen gewährleisten eine gute Verknöcherung oder Verbundosteogenese.

Auf das Aufbauteil solcher Implantate werden dann Prothetikelemente, wie etwa Brücken oder Kronen in der Regel unter Zwischenlage von sog. Abutments aufgeschraubt oder zementiert. In jüngster Zeit sind hierfür auch keramische Abutments in der Entwicklung, die auf das Aufbauteil appliziert werden.

Keramische Abutments weisen besondere Vorteile bei der späteren Anpassung der Suprakonstruktion wie Brücken oder Kronen, auf dem Abutment auf. Sie lassen sich einfach beschleifen und ermöglichen einen Aufbau von Konstruktionen nach herkömmlichen, dem Zahnarzt geläufigen Verfahren. Besondere Vorteile weisen keramische Abutments insbesondere infolge der Tatsache auf, dass ihre Farbe der natürlichen Zahnfarbe angenähert werden kann. In jüngster Zeit sind auch Abutments aus Zirkonoxid in der Entwicklung, die sich durch eine besonders hohe Festigkeit auszeichnen.

Zwar ermöglicht ein derartiges System aus zweiteiligem Implantat mit Verankerungsteil und Aufbauteil, Abutment und darauf applizierter Prothetik eine gute Anpassung an die geometrischen Verhältnisse bei verschiedenen Indikationen, jedoch ist die Vielzahl der beteiligten Komponenten grundsätzlich nachteilig für die mechanische Stabilität des Gesamtsystems. Auch führt jede weitere Verbindung zu möglichen Ansatzpunkten für Bakterien, die im Spalt Parodontitis oder Gingivitis verursachen können.

Aus ästhetischen Gründen wäre es insbesondere im vorderen, sichtbaren Bereich jedoch wünschenswert, alle transgingivalen Teile, auch das Verankerungsteil, aus Keramik herzustellen. Jedoch ist eine Schraubverbindung zwischen Metall (Verankerungsteil aus Titan) und Keramik (Aufbauteil) u.a. aufgrund der Unterschiede in den thermischen Ausdehnungskoeffizienten nicht realisierbar Dagegen konnten sich Verankerungsteile aus Keramik nicht durchsetzen, da diese meist nicht die gewünschte mechanische Stabilität aufweisen.

Zwar stehen in jüngster Zeit auch Zirkonoxidkeramiken zur Verfügung, die eine äußerst hohe Festigkeit aufweisen, insbesondere, wenn die Formkörper heißisostatisch gepresst oder heißisostatisch nachverdichtet sind. Eine derartige Zirkonoxidkeramik, die etwa 92,1 - 93,5 Gew.-% ZrO₂, 4,5 - 5,5 Gew.-% Y₂O₃ und 3,8 - 2,2 Gew.-% HfO₂ aufweist, ist beispielsweise aus der US 6,165,925 bekannt.

Jedoch erscheint ein Einsatz von Zirkonoxidkeramik als Material zur Herstellung des Verankerungsteils eines Implantats nicht möglich, da es für eine ausreichende mechanische Stabilität der Zirkonoxidkeramik notwendig ist, diese hochdicht, praktisch ohne messbare Porosität herzustellen, wobei sich gleichzeitig eine glatte, äußerst harte Oberfläche ergibt.

Ein derartiges Material ist bioinert, so dass keine Verbundosteogenese zu erwarten ist, weshalb dieser Werkstoff als nicht geeignet zur Herstellung des Verankerungsteils eines Implantats angesehen wird.

Aus der DE-A-19530981 ist eine präfabrizierte vollkeramische Implantatsuprakonstruktion aus Zirkondioxid zum zahnfarbenen Aufbau implantatgetragener artifizieller Kronenstümpfe bekannt. Hierbei werden zwar gewisse Vorteile im Hinblick auf die Ästhetik von Zirkonoxidkeramik und eine ggf. vereinfachte Präparation beim Aufbau der Suprakonstruktion ermöglicht, jedoch weist auch diese Implantatkonstruktion die grundsätzlichen Nachteile auf, die mit mehrteiligen Implantatkonstruktionen verbunden sind. Da das eigentliche Implantat aus Titan besteht, ergeben sich nämlich nach wie vor Probleme im Verbindungsbereich zwischen dem Implantat und der aus Zirkonoxidkeramik bestehenden Suprakonstruktion.

Aus der WO-A-0134056 ist ein einteiliges Dentalimplantat aus Zirkonoxidkeramik bekannt, das zur Knochenseite hin keilförmig zuläuft und durch Einschlagen mit einem Hammer oder dergleichen in eine Knochenbohrung geeigneter Form und Größe eingesetzt wird.

Ein weiteres Dentalretentionselement gemäß der EP-A-0870478 kann gleichfalls aus Zirkonoxid bestehen und ist für den Einsatz in eine Bohrung einer Zahnwurzel oder eines Zahnrestes geeignet. Das Implantat weist gleichfalls eine keilförmige Form auf und wird durch Einschlagen eingesetzt. Es weist einen Überzug aus einer Keramikschicht auf.

Um eine Osteointegration zu verbessern, ist es grundsätzlich bekannt, metallische Dentalimplantate einer Strahlbehandlung zu unterziehen (vgl. US-B-6174167 und EP-A-0388576). Ferner sind in der DE-A-4012731 grundsätzlich verschiedene Verfahren zur Oberflächenbehandlung von Implantaten offenbart, um eine definierte raue Oberfläche zu erzeugen. Auch diese Druckschrift bezieht sich ausschließlich auf die Behandlung metallischer Implantate.

Der Erfindung liegt somit die Aufgabe zugrunde, ein verbessertes Dentalimplantat zu schaffen, mit dem eine hohe mechanische Stabilität des Gesamtsystems gewährleistet ist und gleichzeitig die Vorteile von Keramik insbesondere im Sichtbereich genutzt werden können. Dabei soll eine sichere Osteointegration gewährleistet sein.

Diese Aufgabe wird durch ein Dentalimplantat mit den Merkmalen des Anspruchs 1 gelöst.

Die Aufgabe der Erfindung wird auf diese Weise vollkommen gelöst.

Überraschenderweise hat sich gezeigt, dass mit einem derartigen Dentalimplantat aus einer Zirkonoxidkeramik eine gute Verknöcherung während der Einheilzeit gewährleistet werden kann, wobei die Zirkonoxidkeramik 92.1 bis 93.5 Gew% ZrO₂ und 4.5 bis 5.5 Gew.% Y₂O₃ und 1.8 bis 2.2 Gew.% HfO₂ aufweist.

Als Vorteil ist hierbei die Einteiligkeit des Implantates anzusehen, das kombiniert mit der hohen Festigkeit von Zirkonoxidkeramik eine hohe Stabilität des Gesamtsystems gewährleistet. Gleichzeitig ergibt sich der besondere Vorteil, dass das Aufbauteil der natürlichen Zahnfarbe angenähert ist und somit insbesondere im Sichtbereich die Herstellung von vollkommen natürlich aussehenden keramischen Rekonstruktionen ermöglicht. Auch kann das Aufbauteil unmittelbar beschliffen werden, was eine einfache und vorteilhafte Anpassung der weiteren zu applizierenden Elemente ermöglicht. Auf zusätzliche Abutments kann ggf. verzichtet werden.

Erfindungsgemäß wird durch Sandstrahlen mit Korund mit einer maximalen Rauhtiefe im Bereich des Verankerungsteils von 6.4 µm bei einer durchschnittlichen Rautiefe von 4.7 µm eine gute Osteointegration bei einem keramischen Implantat auf Zirkonoxidbasis gewährleistet.

Das erfindungsgemäße Implantat wird transgingival eingesetzt. So wird das Weichgewebeattachment mit Ausbildung der biologischen Breite nicht mehr durch einen Zweiteingriff wie bei schleimhautgedeckt einheilenden Systemen gestört.

Erfindungsgemäß wird nach der Implantation eine Erstversorgung durch Aufsatz eines Provisoriums unmittelbar auf das Aufbauteil ermöglicht. Hierzu müssen nach Erzielung einer ausreichenden Primärstabilität etwa durch Einschrauben des Verankerungsteils in eine Knochenbohrung lediglich Maßnahmen getroffen werden, um insbesondere Scherbewegungen in der folgenden Einheilzeit zu vermeiden. Bei mehreren Implantaten kann dies durch eine Verblockung gewährleistet werden, während dies bei Einzelimplantaten durch eine Fixierung an benachbarten Zähnen oder Prothetikteilen teilweise durch Kleben gewährleistet wird.

Das Verankerungsteil weist einen Gewindeabschnitt auf.

Auf diese Weise kann das erfindungsgemäße Implantat mit der notwendigen Primärstabilität implantiert werden, so dass im Anschluss an die Implantation unmittelbar eine Erstversorgung durch ein Provisorium erzielt werden kann.

Für die Erzielung einer guten Verbundosteogenese weist das erfindungsgemässe Dentalimplantat eine maximale Rautiefe im Bereich des Verankerungsteils von 6.4 µm bei einer durchschnittlichen Rautiefe von 4.7 µm auf.

Hierzu kommt eine Strahlbehandlung durch Sandstrahlen mit Korund in Frage.

Die Strahlbehandlung kann hierbei etwa mit einem Druck zwischen etwa 1 bar und 10 bar, vorzugsweise zwischen 2 und 6 bar, insbesondere zwischen 3 und 5 bar durchgeführt werden.Mit solchermaßen insbesondere im Bereich des Verankerungsteils vorbehandelten Dentalimplantaten lässt sich eine sichere Verbundosteogenese erzielen.

Das Aufbauteil weist zweckmäßigerweise eine Aufnahme zum Ansatz eines Schraubwerkzeuges auf.

Hierbei kann das Aufbauteil zur formschlüssigen Aufnahme eines Schraubwerkzeuges ausgebildet sein, wie dies grundsätzlich bereits bekannt ist.

Das Dentalimplantat kann grundsätzlich in allen bereits bekannten Implantatformen oder noch zu entwickelnden Formen ausgebildet sein.

Hierbei kann das Aufbauteil etwa an einer Verlängerung des Verankerungsteils ausgebildet sein oder aber gegenüber dem Verankerungsteil abgewinkelt sein.

Gleichfalls kann das Aufbauteil eine kegelstumpfförmige Grundform aufweisen, wodurch eine Klebebefestigung von darauf aufzubauenden Abutments für Prothesekonstruktionen erleichtert wird.

Darüber hinaus sind natürlich auch weitere Formen des Aufbauteils denkbar, wie z.B. eine quadratische oder hexagonale Form.

Die Herstellung der Zirkonoxidkeramik für das einteilige Dentalimplantat ist grundsätzlich im Stand der Technik bekannt und wird als nicht zur Erfindung gehörend angesehen. Hierzu wird etwa auf die eingangs erwähnte US 6,165,925 verwiesen, deren Offenbarungsgehalt vollständig in die vorliegende Anmeldung einbezogen wird. Eine solchermaßen hergestellte Zirkonoxidkeramik kann beispielsweise durch Schleifen auf die gewünschte Form des Dentalimplantats bearbeitet werden und anschließend an ihrer Oberfläche nachbehandelt werden, um die gewünschte Oberflächenbeschaffenheit zu erzielen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile ergeben sich aus der folgenden Beschreibung bevorzugter Ausführungsbeispiele unter Bezugnahme auf die Zeichnung. Es zeigen:
- Fig. 1: eine Ansicht einer ersten Ausführung eines erfindungsgemäßen Implantats;
- Fig. 2: eine Ansicht einer leicht gegenüber der Ausführung der Fig. 1 abgewandelten Ausführung eines erfindungsgemäßen Implantats;
- Fig. 3: eine Ansicht einer weiteren Ausführung eines erfindungsgemäßen Implantats, bei dem das Aufbauteil gegenüber dem Verankerungsteil leicht abgewinkelt ist;
- Fig. 4: eine REM-Aufnahme eines Testimplantats, das einem Patienten implantiert wurde und nach einer Einheilzeit von etwa 3 Monaten zusammen mit der umgebenden Knochensubstanz mittels eines Bohrers entfernt wurde.

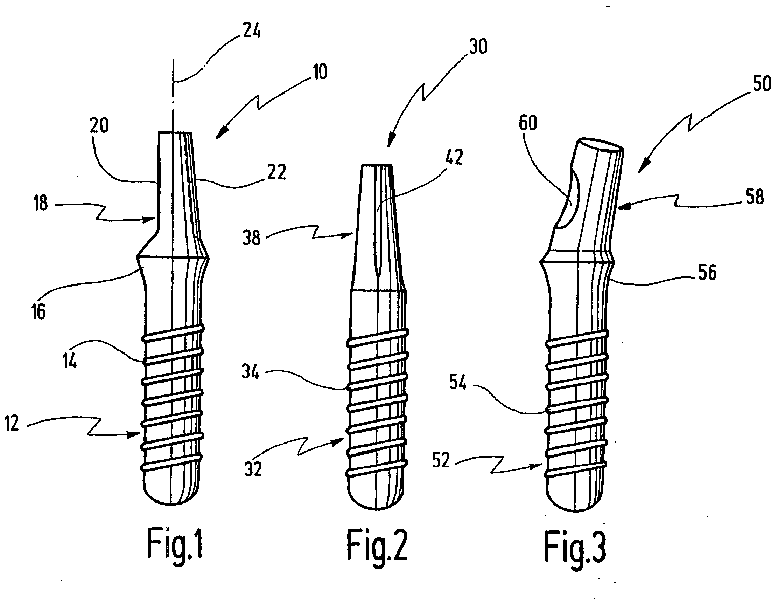

In den Figuren 1 - 3 sind verschiedene mögliche Ausführungsformen eines erfindungsgemäßen einteiligen Dentalimplantats dargestellt, ohne dass dies einschränkend bezüglich der Formgestaltung des Implantats zu verstehen ist.

In Fig. 1 ist ein erfindungsgemäßes Dentalimplantat insgesamt mit der Ziffer 10 bezeichnet. Es weist ein Verankerungsteil 12 mit einem Gewindeabschnitt 14 und einem abgerundeten unteren Ende auf. Das Verankerungsteil 12 geht an seinem oberen Ende über einen leicht außenkonisch nach außen aufgeweiteten Abschnitt 16 in ein einstückig damit ausgebildetes Aufbauteil 18 auf, das in der Verlängerung der Längsachse 24 des Gewindeabschnitts 14 verläuft. Das Aufbauteil 18 besitzt eine kegelstumpfförmige oder konische Form und ist an einer Seite mit einer Abflachung 20 versehen. An der der Abflachung 20 gegenüberliegenden Seite ist eine Rille 22 in die Außenoberfläche eingeformt, die von der oberen Stirnfläche des Aufbauteils 18 aus nach unten verläuft und in einem konischen Abschnitt endet, der den Anschluss an den Konusabschnitt 16 des Verankerungsteils 12 bildet.

Die Abflachung 20 dient in Verbindung mit der gegenüberliegenden Rille 22 zum formschlüssigen Ansatz eines Schraubwerkzeuges, das eine entsprechend angepasste Steckaufnahme aufweist.

Fig. 2 zeigt eine leicht abgewandelte Ausführung eines insgesamt mit der Ziffer 30 bezeichneten Dentalimplantats, wiederum mit einem Verankerungsteil 32 mit Gewindeabschnitt 34 und einem sich daran anschließenden konischen Aufbauteil 38, an dem die Rille 42 zu sehen ist, da das Dentalimplantat 30 um 90° gegenüber dem Dentalimplantat 10 gemäß Fig. 1 versetzt angeordnet ist.

Im Unterschied zu der Ausführung gemäß Fig. 1 weist das Dentalimplantat 30 keinen konischen Abschnitt im Übergangsbereich zwischen Verankerungsteil 32 und Aufbauteil 38 auf. Das Aufbauteil 38 schließt sich vielmehr unmittelbar als konischer Abschnitt an das zylindrisch ausgebildete Verankerungsteil 32 an. Auf der der Rille 42 gegenüberliegenden Seite kann wiederum eine entsprechende Abflachung, wie in Fig. 1 zu sehen ist, vorgesehen sein.

In Fig. 3 ist eine abgewandelte Ausführung eines Dentalimplantates insgesamt mit der Ziffer 50 bezeichnet.

Das Dentalimplantat 50 weist ein der Ausführung gemäß Fig. 1 entsprechendes Verankerungsteil 52 mit Gewindeabschnitt 54 auf, das über einen Außenkonusabschnitt 56 in ein Aufbauteil 58 übergeht.

Das Aufbauteil 58 weist zwar wiederum eine konische Grundform auf, ist jedoch gegenüber der Längsachse des Verankerungsteils 52 abgewinkelt, beispielsweise um einen Winkel von etwa 15°, was insbesondere für den Einsatz im Schneidezahnbereich in vielen Fällen sinnvoll ist. Durch eine geeignete Vertiefung 60 an einer Außenfläche des Aufbauteils 58 wird wiederum ein formschlüssiger Ansatz eines Schraubwerkzeuges ermöglicht, um auch dieses Dentalimplantat mit abgewinkeltem Aufbauteil in eine Bohrung des Knochens einschrauben zu können.

Das Verankerungsteil kann beispielsweise eine Axiallänge von 10 mm aufweisen, wobei sich die anderen Dimensionen entsprechend ergeben.

Es versteht sich jedoch, dass die Dimensionierung und Formgebung in Abhängigkeit von der jeweiligen Indikation in geeigneter Weise angepasst werden kann.

Die erfindungsgemäßen Dentalimplantate 10, 30, 50 sind einstückig aus einer Zirkonoxidkeramik hergestellt, wobei es sich um eine stabilisierte Zirkonoxidkeramik mit 92,1 bis 93,5 Gew.-% ZrO₂ und 4,5 bis 5,5 Gew.-% Y₂O₃ und 1,8 bis 2,2 Gew.-% HfO₂ gemäß der eingangs genannten US 6,165,925, handeln kann. Eine derartige stabilisierte Zirkonoxidkeramik weist insbesondere bei Herstellung durch heißisostatisches Pressen oder durch Sintern mit anschließender heißisostatischer Nachverdichtung eine außerordentlich hohe mechanische Stabilität und Festigkeit auf. Auch die Verwendung beliebiger anderer Zirkonoxidkeramiken ist denkbar.

Das Verankerungsteil ist durch Sandstrahlen mit Korund an seiner Außenoberfläche behandelt, um so eine gute Verbundosteogenese nach der Implantation zu erreichen. Das Verankerungsteil ist durch ein Abtragungsverfahren aufgeraut.

Durch erste Feldversuche wurde nachgewiesen, dass auch ein einteiliges Zirkonoxid-Implantat, dessen Außenoberfläche lediglich einer geeigneten abtragenden Behandlung unterzogen wurde, eine Verbundosteogenese gewährleisten kann.

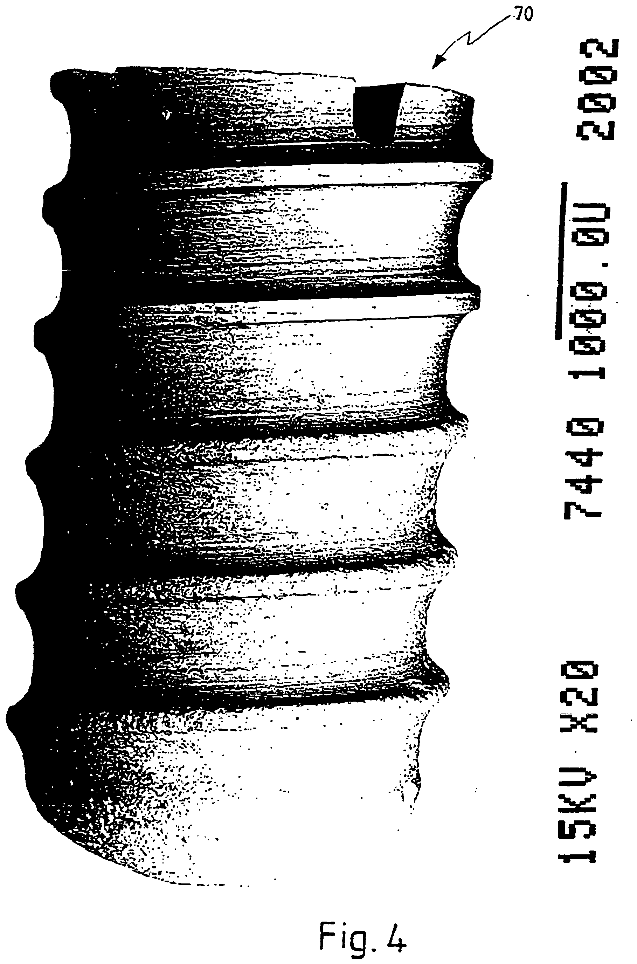

Hierzu wurden Testimplantate gemäß Fig. 4 aus einer Zirkonoxidkeramik gemäß der zuvor genannten US 6,165,925 hergestellt und durch Schleifen auf die Form gemäß Fig. 4 bearbeitet.

Die Oberfläche wurde anschließend mit einem Strahldruck von 4 bar mit Korund sandgestrahlt. Dabei ergab sich eine maximale Rautiefe von 6,4 µm bei einer durchschnittlichen Rautiefe von 4,7 µm. Das in Fig. 4 dargestellte Testimplantat 70 wurde einem Patienten implantiert. Nach einer Einheilzeit von etwa 3 Monaten wurde das Testimplantat mit Hilfe eines Hohlbohrers zusammen mit einem geringen Anteil der umgebenden Knochensubstanz wieder entfernt und histologisch auf die Osteointegration untersucht. Es zeigte sich, dass eine Verbundosteogenese erreichbar ist.

## Patentansprüche

1. Einteiliges Dentalimplantat mit einem Verankerungsteil (12, 32, 52) zur Verankerung im Knochen und mit einem Aufbauteil (18, 38, 58) zur Aufnahme eines zu applizierenden Elementes, wobei Verankerungsteil (12, 32, 52) und Aufbauteil (18, 38, 58) einstückig aus einer Zirkonoxidkeramik ausgebildet sind, und das Verankerungsteil (12, 32, 52) einen Gewindeabschnitt (14, 34, 54) aufweist, **dadurch gekennzeichnet dass** das Verankerungsteil (12, 32, 52) an seiner Außenoberfläche zumindest teilweise durch Sandstrahlen mit Korund aufgeraut ist, und dass die maximale Rautiefe im Bereich des Verankerungsteils 6.4 µm beträgt bei einer durchschnittlichen Rautiefe von 4.7 µm und die Zirkonoxidkeramik 92.1 bis 93.5 Gew.% ZrO₂ und 4.5 bis 5.5 Gew.% Y₂O₃ und 1.8 bis 2.2 Gew.% HfO₂ aufweist.

## Claims

1. One-part dental implant with an anchoring part (12, 32, 52) for anchoring in the bone and with a mounting part (18, 38, 58) for receiving an element to be applied, wherein the anchoring part (12, 32, 52) and the mounting part (18, 38, 58) are integrally made of a zirconium oxide ceramic, and the anchoring part (12, 32, 52) has a threaded section (14, 34, 54), **characterized in that** the anchoring part (12, 32, 52) is at least partially roughened at its outer surface by sand-blasting using corundum, and **in that** the maximum surface roughness within the region of the anchoring part is 6.4 µm with an average surface roughness of 4.7 µm and the zirconium oxide ceramic comprises 92.1 to 93.5 wt.-% ZrO₂ and 4.5 to 5.5 wt.-% Y₂O₃ and 1.8 to 2.2 wt.-% HfO₂.

## Revendications

1. Implant dentaire en une partie comprenant une partie d'ancrage (12, 32, 52) pour ancrer dans l'os et une partie d'assemblage (18, 38, 58) pour recevoir un élément à appliquer, la partie d'ancrage (12, 32, 52) et la partie d'assemblage (18, 38, 58) étant réalisées d'une seule pièce à partir d'une céramique en oxyde de zirconium, et la partie d'ancrage (12, 32, 52) comprenant une portion filetée (14, 34, 54), **caractérisé en ce que** la partie d'ancrage (12, 32, 52) est rendue rugueuse au moins partiellement sur sa surface extérieure par sablage avec du corindon, et **en ce que** la rugosité de surface maximum dans la région de la partie d'ancrage est 6.4 µm avec une rugosité de surface moyenne de 4.7 µm et la céramique en oxyde de zirconium comprend 92.1 à 93.5 % en poids de ZrO₂ et 4.5 à 5.5 % en poids de Y₂O₃ et 1.8 à 2.2 % en poids de HfO₂.
